# EUROPÄISCHE PATENTANMELDUNG

(11) **EP 3 051 829 A1**
(43) Veröffentlichungstag der Anmeldung: **03.08.2016**
(21) Anmeldenummer: 16153381.5
(22) Anmeldetag: 29.01.2016
(51) Int. Cl.: H04N 21/4402, H04N 21/436

(54) **BEREITSTELLUNG VON AUDIO- UND/ODER VIDEOINHALTEN ZUR WIEDERGABE MITTELS MOBILER ENDGERÄTE**

(30) Priorität: 30.01.2015 DE 102015101400
(71) Anmelder: Deutsche Telekom AG, 53113 Bonn (DE)
(72) Erfinder: PRAGER, Benjamin, 64521 Groß-Gerau (DE)
(74) Vertreter: Brandt & Nern Patentanwälte

(57) **Zusammenfassung**

Es wird eine Lösung zur Bereitstellung von Audio- und/oder Videoinhalten (A/V-Inhalten) für eine Wiedergabe mittels mobiler Endgeräte (2₁, 2ₙ) unterschiedlicher technischer Spezifikation beschrieben, bei der von einem Nutzer ausgewählte A/V-Inhalte mittels einer dafür ausgebildeten Aufzeichnungseinrichtung (3, 3') in Form digitaler Daten gespeichert und später aufgrund einer Anforderung für eine Wiedergabe auf ein dazu verwendetes mobiles Endgerät (2₁, 2ₙ) übertragen werden. Die A/V-Inhalte werden dabei in einem primären Aufzeichnungsformat einer Aufzeichnungseinrichtung (3, 3') gespeichert, die als Bestandteil einer lokal, bei einem die A/V-Inhalte zur Aufzeichnung auswählenden Nutzer angeordneten Endgeräteeinrichtung (1) ausgebildet ist. Letztere stellt die aufgezeichneten A/V-Inhalte über ein Netzwerk (6, 6') für eine Wiedergabe mittels der mobilen Endgeräte (2₁, 2ₙ) bereit, wobei ein angeforderter A/V-Inhalt vor seiner Übertragung an ein ihn über das Netzwerk (6, 6') anforderndes mobiles Endgerät (2₁, 2ₙ) in ein die Wiedergabe auf diesem Endgerät (2₁, 2ₙ) ermöglichendes Datenformat konvertiert wird.

## Beschreibung

Die Erfindung betrifft eine Lösung zur Bereitstellung von Audio- und/oder Videoinhalten für eine zeitversetzte Wiedergabe mittels mobiler Endgeräte unterschiedlicher technischer Spezifikation und mit infolge dessen insbesondere unterschiedlicher Leistungsfähigkeit. Hierbei bezieht sich die Erfindung insbesondere auf die Bereitstellung von digitalisierten TV-Inhalten für eine zeitversetzte Wiedergabe mittels der genannten mobilen Endgeräte, ohne jedoch hierauf beschränkt zu sein. Gegenstände der Erfindung sind ein entsprechendes Verfahren und ein zur Durchführung dieses Verfahrens geeignetes System.

In der jüngeren Zeit werden Audio- und/oder Videoinhalte in zunehmendem Maße unter Verwendung dazu geeigneter mobiler Endgeräte, wie beispielsweise Smartphones und Tablet-PCs, konsumiert. Dies trifft auch auf digitalisierte Fernsehinhalte zu, welche von den Nutzern mittels entsprechender mobiler Endgeräte als Stream über das Internet bezogen werden. Die Wiedergabe von Livestreams auf mobilen Endgeräten hat dabei zwischenzeitlich eine weite Verbreitung erlangt.

Im Hinblick auf die Wiedergabe von TV-Inhalten besteht jedoch nicht nur ein Bedarf beziehungsweise eine Nachfrage nach Livestreams, also nach einer Wiedergabe entsprechender Inhalte im Moment ihrer Ausstrahlung beziehungsweise Verbreitung durch entsprechende TV-Programmquellen, wie terrestrisch abstrahlende Fernsehsender oder Inhalte über Kabel oder das Internet verbreitende Einrichtungen. Vielmehr wird von den Nutzern auch die Möglichkeit einer zeitversetzten Wiedergabe von TV-Inhalten und dergleichen nachgefragt, wie dies seit langem im häuslichen Bereich, beispielsweise im Zusammenspiel zwischen einem Festplattenreceiver und einem stationären Fernsehgerät, möglich und gebräuchlich ist.

Unabhängig von der Frage, ob TV-Inhalte live oder zeitversetzt wiedergegeben werden sollen, besteht dabei im Hinblick auf die Verwendung mobiler Endgeräte ein Problem darin, dass es eine Vielzahl unterschiedlicher Endgeräte mit sehr unterschiedlicher Leistungsfähigkeit und sich voneinander stark unterscheidender technischer Spezifikation gibt. Unterschiede zwischen den Geräten bestehen dabei insbesondere hinsichtlich der Auflösung ihrer zur visuellen Wiedergabe der Inhalte dienenden Displays, der Bildfrequenz, mit welcher diese Displays betrieben werden, und der durch die Displays aufgrund ihrer jeweiligen Technologie unterstützten Farbtiefe. Hieraus ergeben sich in weiterer Konsequenz Unterschiede zwischen den Datenformaten, in welchen den mobilen Endgeräten die TV-Inhalte zuzuführen sind, damit diese die Inhalte verarbeiten und an ihrem Display entsprechend dessen Spezifikation ausgeben können. In der Regel werden darüber hinaus entsprechende Inhalte enthaltende Dateien für ihre Übertragung komprimiert, woraus je nach angewandtem Komprimierungsverfahren auch unterschiedliche Komprimierungsformate resultieren.

Dem Grunde nach sind die vorgenannten Probleme und die sich daraus ergebenden Anforderungen technisch beherrschbar. Im Hinblick auf das Livestreaming von TV-Inhalten werden dabei die entsprechenden Inhalte einfach in mehreren, voneinander verschiedenen Datenformaten zur Verfügung gestellt und live ausgesendet. Eine vergleichbare Vorgehensweise ist insoweit auch für die Bereitstellung von TV-Inhalten für eine zeitversetzte Wiedergabe möglich.

So wird beispielsweise durch die US 2011 0231 521 A1 eine hierzu geeignete, sogenannte Medienkonvergenzplattform beschrieben. Eine solche Plattform wird gemäß der in der Schrift dargestellten Lösung durch Cluster von Servern mit unterschiedlicher Funktionalität realisiert, welche in verschiedenen Datencentern eines entsprechenden Dienstleistungsanbieters angeordnet sind. Für eine zeitversetzte Wiedergabe werden TV-Inhalte dabei an zentraler Stelle mittels der schon erwähnten Server in unterschiedlichen Datenformaten gespeichert. Von hier aus werden sie dazu berechtigten Nutzern beziehungsweise Geräten auf Anforderung hin zur Verfügung gestellt. Die dargestellte Lösung bietet in diesem Zusammenhang die Möglichkeit, TV-Inhalte, wie beispielsweise einen bestimmten Beitrag, zunächst mittels eines ersten mobilen Endgeräts wiederzugeben und sie gegebenenfalls nach einer Unterbrechung auf einem anderen mobilen Endgerät weiterzuschauen. Eine vergleichbare Lösung derselben Anmelderin wird durch die US 2012 0084 803 A1 beschrieben.

Darüber hinaus gibt es über das Internet zugängliche Onlinedienste, wie Save.TV oder Bong.TV, welche ein Livestreaming für hinsichtlich ihrer technischen Spezifikation unterschiedliche Endgeräte ermöglichen und darüber hinaus die Möglichkeit einer Aufzeichnung entsprechender Beiträge und deren späteren Abruf bieten. Auch hierbei werden die für eine zeitversetzte Wiedergabe bereitgestellten Inhalte an zentraler Stelle, nämlich durch Einrichtungen der entsprechenden Onlinedienstanbieter gespeichert.

In einigen Ländern, so auch in Deutschland, ist es jedoch aus rechtlichen Gründen nicht möglich, TV-Inhalte an zentraler Stelle mittels durch einen kommerziellen Anbieter betriebener Einrichtungen aufzuzeichnen und diese für eine spätere, zeitversetzte Wiedergabe zur Verfügung zu stellen. Sofern ein TV-Dienstanbieter seinen Kunden beziehungsweise Nutzern eine Aufnahmefunktion zur Verfügung stellen möchte, muss er bei der Aufnahme einer Livesendung für seine Kunden eine sogenannte Privatkopie erstellen. Hierbei reicht es nicht aus, dass er gewissermaßen eine Masterkopie erstellt und diese für einen späteren Abruf in einem einer größeren Zahl von Nutzern zugänglichen Netzwerkspeicher speichert. Er muss vielmehr für jeden einzelnen Nutzer, welcher einen solchen Service nutzen möchte, eine individuelle Privatkopie anlegen und dauerhaft speichern. Eine nach diesem Prinzip arbeitende Lösung wird beispielsweise in der EP 1 867 153 B1 beschrieben. Bei einer größeren Zahl von Nutzern beziehungsweise Kunden erfordert diese Lösung immense Speicherkapazitäten, wobei sich der Speicherplatz darüber hinaus nochmals vervielfacht, wenn entsprechende TV-Inhalte für einzelne oder mehrere dieser Nutzer womöglich gleichzeitig in mehreren Datenformaten vorgehalten werden sollen.

Aufgabe der Erfindung ist es, eine Lösung bereitzustellen, welche die vorgenannten Probleme löst. Die betreffende Lösung soll dabei eine Bereitstellung von Audio- und/oder Videoinhalten zur zeitversetzten Wiedergabe auch dann ermöglichen, wenn deren Aufzeichnung an zentraler Stelle durch einen Dienstleistungsanbieter, wie beispielsweise im Falle von TV-Inhalten, aufgrund gesetzlicher Beschränkungen nicht möglich ist.

Die Aufgabe wird durch ein Verfahren mit den Merkmalen des Patentanspruchs 1 gelöst. Ein die Aufgabe lösendes, zur Durchführung des Verfahrens geeignetes System wird durch den ersten Sachanspruch charakterisiert. Vorteilhafte Ausbeziehungsweise Weiterbildungen der Erfindung sind durch die jeweiligen Unteransprüche gegeben.

Bei den in Rede stehenden, zur zeitversetzten Wiedergabe zur Verfügung zu stellenden Inhalten kann es sich um reine Audiobeträge, um rein visuelle Beiträge (Video- oder Bildsequenzen) oder, wie bei Filmen beziehungsweise Videobeiträgen üblich, um Beiträge handeln, die sowohl visuellen als auch akustischen Charakter haben. Daher soll in diesem Zusammenhang von Audio- und/oder Videoinhalten beziehungsweise zur weiteren sprachlichen Vereinfachung in den nachfolgenden Darstellungen und in den Patentansprüchen von A/V-Inhalten gesprochen werden.

Nach dem die Aufgabe lösenden Verfahren zur Bereitstellung von A/V-Inhalten, bei denen es sich beispielsweise um durch eine TV-Programmquelle ausgestrahlte TV-Inhalte handelt, werden von Nutzern für eine zeitversetzte Wiedergabe mittels mobiler Endgeräte unterschiedlicher technischer Spezifikation (nachfolgend auch synonym als mobile Clients bezeichnet) auswählbare A/V-Inhalte mittels einer dafür ausgebildeten Aufzeichnungseinrichtung in digitaler Form gespeichert. Mittels der vorgenannten Aufzeichnungseinrichtung aufgezeichnete A/V-Inhalte werden für die zeitversetzte Wiedergabe auf einem mobilen Endgerät durch das betreffende mobile Endgerät beziehungsweise durch den mobilen Client bei der Aufzeichnungseinrichtung angefordert und aufgrund dieser Anforderung an das betreffende, sie anfordernde mobile Endgerät übertragen. Die Auswahl zur Aufzeichnung bestimmter A/V-Inhalte kann dabei an der Endgeräteeinrichtung selbst oder mittels eines auch zu ihrer Wiedergabe vorgesehenen mobilen Endgeräts erfolgen.

Hierbei werden die entsprechenden A/V-Inhalte für eine zeitversetzte Wiedergabe über ein Netzwerk bereitgestellt, indem sie zunächst in einer lokal, bei einem sie zur Aufzeichnung auswählenden Nutzer angeordneten, zu dem vorgenannten Netzwerk gehörenden Endgeräteeinrichtung, deren Bestandteil die bereits genannte Aufzeichnungseinrichtung ist, in einem primären Aufzeichnungsformat der Aufzeichnungseinrichtung gespeichert werden. Vor ihrer Übertragung auf ein sie zur zeitversetzten Wiedergabe anforderndes, sich dazu mit dem Netzwerk verbindendes mobiles Endgerät werden die solchermaßen in dem primären Aufzeichnungsformat der Aufzeichnungseinrichtung aufgezeichneten A/V-Inhalte mittels eines Konverters in ein Datenformat (Zielformat) konvertiert, auf dessen Grundlage der jeweilige A/V-Inhalt von dem mobilen Endgerät (Client) wiedergegeben, also verarbeitet werden kann. Der vorgenannte Konverter umfasst zumindest einen Encoder, welcher die aufgezeichneten A/V-Inhalte in dem jeweiligen Datenformat, also in dem Zielformat codiert.

Im Kontext der vorstehenden Ausführungen und der nachfolgenden sowie der Darstellung der Erfindung in den Patentansprüchen liegt den Begriffen primäres Aufzeichnungsformat und Datenformat beziehungsweise Zielformat ein Verständnis zugrunde, wonach hierdurch Parameter eines A/V-Inhalts, wie die (optische) Auflösung, die Bildfrequenz, die Farbtiefe eines Videoinhalts, die Bitrate und die Dynamik eines aufgezeichneten oder übertragenen Audioinhalts, codiert und/oder das Komprimierungsformat eines entsprechend codierten A/V-Inhalts festgelegt sind. Demnach umfasst der Begriff der Konvertierung das Recodieren und/oder das Transcodieren eines entsprechenden A/V-Inhalts, wobei beim reinen Recodieren wenigstens einer der vorstehend genannten Parameter (in Anpassung an die Erfordernisse eines einen A/V-Inhalt anfordernden Endgeräts) verändert wird, aber das Komprimierungsformat gleich bleibt und beim Transcodieren eine Überführung in ein anderes Komprimierungsformat, zum Beispiel von AVI in MPEG (Video) oder von FLAC in MP3 (Audio) erfolgt. Selbstverständlich ist beim Transcodieren auch die gleichzeitige Veränderung wenigstens eines der eingangs dieses Abschnitts genannten Parameter möglich.

Für die Art und Weise sowie den Zeitpunkt der zuvor angesprochenen Konvertierung sind gemäß der hier vorgeschlagenen Lösung unterschiedliche Möglichkeiten gegeben, welche nachfolgend noch näher erläutert werden sollen. In jedem Falle erfolgt die Konvertierung aber derart, dass im Zusammenhang mit der Tatsache, dass auch die Aufzeichnung von A/V-Inhalten, wie TV-Inhalten, lokal beim Nutzer erfolgt, jedenfalls den insoweit in Deutschland bestehenden gesetzlichen Anforderungen jederzeit Rechnung getragen wird. Die Aufzeichnung entsprechender TV-Inhalte erfolgt dabei in jedem Falle in der Form einer Privatkopie, nämlich durch die Aufzeichnungseinrichtung der bei einem den Inhalt zur Aufzeichnung auswählenden Nutzer lokal angeordneten Endgeräteeinrichtung, so dass nicht etwa anbieterseitig riesige Speicherkapazitäten vorgehalten werden müssen, um Privatkopien für eine Vielzahl von Nutzern aufzuzeichnen.

Wie bereits ausgeführt, erfolgt die Aufzeichnung dafür ausgewählter A/V-Inhalte in einem primären Aufzeichnungsformat, welches durch die Art der bei dem Nutzer als Bestandteil der Endgeräteeinrichtung angeordneten Aufzeichnungseinrichtung bestimmt wird, wobei im Nachhinein eine Wandlung beziehungsweise Konvertierung in (mindestens) ein durch ein mobiles Endgerät verarbeitbares, das heißt wiedergebbares Datenformat erfolgt. Soweit es sich bei den A/V-Inhalten um durch eine TV-Programmquelle ausgestrahlte TV-Inhalte handelt, entspricht das primäre Aufzeichnungsformat der Aufzeichnungseinrichtung vorzugsweise dem nativen Datenformat, in welchem die TV-Inhalte durch die TVProgrammquelle ausgesendet werden. Bei den Quellen zur Aufzeichnung ausgewählter und später zur Wiedergabe angeforderter A/V-Inhalte kann es sich beispielsweise um A/V-Inhalte über ein IP-Netz verbreitende Quellen, A/V-Inhalte über Satellit verbreitende oder terrestrisch abstrahlende Sender oder um Quellen handeln, die das Kabelnetz zur Verbreitung von A/V-Inhalten nutzen.

Wie bereits mehrfach angesprochen, ergibt sich die Unterschiedlichkeit der einzelnen Datenformate dabei beispielsweise aus der Unterschiedlichkeit von Parametern, wie Auflösung, Bildfrequenz, Farbtiefe und Komprimierungsformat. Insoweit ist es zwar bevorzugt, dass die lokal bei dem Nutzer als Teil der Endgeräteeinrichtung angeordnete, unter anderem der Aufzeichnung von TV-Inhalten dienende Aufzeichnungseinrichtung entsprechende TV-Inhalte im nativen Datenformat der jeweiligen TV-Programmquelle aufzeichnet, jedoch ist dies nicht zwingend. Vielmehr ist es denkbar, dass die von einer TV-Programmquelle ausgestrahlten TV-Inhalte durch die entsprechende Aufzeichnungseinrichtung vor dem Abspeichern in ein von dieser Endgeräteeinrichtung verarbeitbares primäres Datenformat umgewandelt werden, um zu einem späteren Zeitpunkt abermals konvertiert zu werden, nämlich in ein von mindestens einem Endgerät, genauer gesagt, von mindestens einem mobilen Endgerätetyp verarbeitbares Datenformat.

Was die bereits mehrfach angesprochene, lokal bei einem Nutzer angeordnete Endgeräteeinrichtung anbelangt, so kann es sich hierbei um ein einzelnes, demnach auch als Aufzeichnungseinrichtung dienendes Endgerät, wie beispielsweise eine Set-Top-Box, gegebenenfalls aber auch um eine Gruppe von mehreren miteinander interagierenden Endgeräten des Nutzers handeln. Dies ist der Grund, warum im Weiteren und in den Patentansprüchen bezüglich der entsprechenden nutzerseitigen Technik nicht von einem Endgerät, sondern von einer Endgeräteeinrichtung gesprochen wird.

Wie bereits ausgeführt, sind für die Art beziehungsweise den Ort sowie für den Zeitpunkt der Konvertierung der ursprünglich im primären Aufzeichnungsformat der Aufzeichnungseinrichtung gespeicherten A/V-Inhalte in ein jeweiliges, von einem mobilen Endgerät verarbeitbares Datenformat unterschiedliche Möglichkeiten gegeben. Entsprechend einer ersten dieser Möglichkeiten werden die in dem primären Datenformat der Aufzeichnungseinrichtung gespeicherten A/V-Inhalte innerhalb von Zeiträumen, in denen entsprechende Ressourcen der lokal bei einem A/V-Inhalte beziehungsweise TV-Inhalte zur Aufzeichnung auswählenden Nutzer angeordneten, die Aufzeichnungseinrichtung umfassenden Endgeräteeinrichtung nicht anderweitig gebunden sind, durch diese Endgeräteeinrichtung selbsttätig in mindestens ein, vorzugsweise in mehrere andere von der Endgeräteeinrichtung unterstützte, durch mobile Endgeräte beziehungsweise mobile Clients verarbeitbare, verschiedene Datenformate (Zielformate) umgewandelt. Die entsprechend umgewandelten A/V-Inhalte werden dann in den jeweiligen Zielformaten in Speichermitteln der Endgeräteeinrichtung gespeichert.

Eine andere Möglichkeit besteht darin, dass die von der Aufzeichnungseinrichtung in ihrem primären Datenformat gespeicherten TV-Inhalte im Zuge einer Auslieferung an ein sie zur zeitversetzten Wiedergabe anforderndes mobiles Endgerät in ein von diesem mobilen Endgerät verarbeitbares Datenformat konvertiert werden. Zur Realisierung dessen sind im Hinblick darauf, dass zunächst klar sein muss, in welches Datenformat, respektive Zielformat, die TV-Inhalte bei ihrer Anforderung zu konvertieren sind, wiederum unterschiedliche Varianten möglich.

Entsprechend einer ersten Variante werden von dem die A/V-Inhalte beziehungsweise TV-Inhalte zur (zeitversetzten) Wiedergabe anfordernden mobilen Endgerät, also von dem mobilen Client, zusammen mit der Anforderung der TV-Inhalte Informationen dazu übermittelt, in welches Datenformat die aufgrund der Anforderung auszuliefernden A/V-Inhalte zu konvertieren sind. Hieraus ergibt sich, dass es sich bei dem mobilen Endgeräten beziehungsweise den Clients im Kontext der Erfindung nicht schlechthin um mobile Endgeräte handelt, sondern um mobile Endgeräte, welche mit entsprechenden, unter anderem auch die Wiedergabe der A/V-Inhalte ermöglichenden Softwarekomponenten beziehungsweise Programmanwendungen ausgestattet sind. Im Hinblick auf die Wiedergabe der A/V-Inhalte auf einem entsprechenden mobilen Endgerät wird dabei durch dieses mobile Endgerät und die auf diesem implementierte und/oder installierte Software ein Mediaplayer bereitgestellt. Hinsichtlich der auch die Anforderung der wiederzugebenden A/V-Inhalte umfassenden Funktion eines Clients, können dabei durch eine entsprechende den Abruf steuernde Software im Zusammenhang mit dem Abruf Angaben zu von dem mobilen Endgerät verarbeitbaren Datenformaten und zu sonstigen technischen Parametern des mobilen Endgeräts, wie beispielsweise eine Displaygröße und -Auflösung an die Endgeräteeinrichtung übermittelt werden, bei welcher ein jeweiliger A/V-Inhalt angefordert wird.

Eine andere Variante besteht darin, dass das insoweit erforderliche Datenformat mittels einer Steuer- und Verarbeitungseinheit bestimmt und ein entsprechender Konverter zur Konvertierung der angeforderten A/V-Inhalte in dieses Datenformat angesteuert wird. Diese Steuer - und Verarbeitungseinheit kann dabei hard- und softwaremäßig dazu ausgebildet sein, Art und/oder Typ des einen A/V-Inhalt anfordernden mobilen Endgeräts zu erkennen. Die Bestimmung des betreffenden (auszuliefernden) Datenformats kann dabei mittels der Steuer- und Verarbeitungseinheit beispielsweise anhand eines von dem die A/V-Inhalte anfordernden mobilen Endgerät/Client für die Anforderung genutzten Protokolls erfolgen, welches Hinweise auf die Art beziehungsweise den Typ dieses mobilen Endgeräts gibt. Denkbar ist es aber auch, dass das betreffende mobile Endgerät zumindest eine Information zu dem Gerätetyp an die Steuer- und Verarbeitungseinheit übermittelt, welche hieraus ableitet, in welchem Datenformat die angeforderten TV-Inhalte bereitzustellen sind.

Die Konvertierung der in dem primären Aufzeichnungsformat gespeicherten A/V-Inhalte in das jeweils benötigte, das heißt von dem anfordernden mobilen Endgerät verarbeitbare Datenformat kann gemäß einer möglichen Ausgestaltung des Verfahrens mittels eines Konverters der lokal bei dem Nutzer angeordneten Endgeräteeinrichtung erfolgen.

Eine weitere praxisgerechte Möglichkeit ist dadurch gegeben, dass der Konverter Teil elektronischer Einrichtungen eines einen entsprechenden Dienst offerierenden Dienstleistungsanbieters ist. Vorzugsweise werden dabei mehrere, die Konvertierung der aufgezeichneten Daten in jeweils unterschiedliche Datenformate ermöglichende Konverter als Bestandteil der genannten elektronischen Einrichtungen des Dienstleistungsanbieters vorgesehen sein. In dem letztgenannten Fall sind also die der Aufzeichnung der A/V-Inhalte dienende Endgeräteeinrichtung mit der Aufzeichnungseinrichtung, das aufgezeichnete A/V-Inhalte zur (zeitversetzten) Wiedergabe anfordernde mobile Endgerät und die vorgenannten elektronischen Einrichtungen des Dienstleistungsanbieters Bestandteile des eingangs genannten Netzwerks beziehungsweise in diesem zumindest temporär miteinander verbunden. Im Falle einer Anforderung von A/V-Inhalten mittels eines mobilen Endgeräts beziehungsweise mobilen Clients kontaktiert das betreffende mobile Endgerät die lokal bei dem Nutzer angeordnete Endgeräteeinrichtung, in welcher die betreffenden TV-Inhalte gespeichert sind, woraufhin die Endgeräteeinrichtung die angeforderten TV-Inhalte an die elektronischen Einrichtungen des Dienstleistungsanbieters übermittelt, welche diese schließlich nach der Konvertierung in das durch das anfordernde mobile Endgerät verarbeitbare Datenformat an das mobile Endgerät, das heißt an den mobilen Client, ausliefern.

Unabhängig davon, ob der die angeforderten A/V-Inhalte von dem primären Aufzeichnungsformat der beim Nutzer als Bestandteil der Endgeräteeinrichtung angeordneten Aufzeichnungseinrichtung in das von dem mobilen Endgerät beziehungsweise dem mobilen Client benötigte Datenformat konvertierende Konverter Teil der besagten Endgeräteeinrichtung oder Teil elektronischer Einrichtungen eines Dienstleistungsanbieters ist, kann die Konvertierung hierbei gewissermaßen "on the fly" erfolgen. Das heißt, die Daten werden im Zusammenhang mit ihrer Auslieferung für eine Wiedergabe, das heißt genauer gesagt, nach ihrer Anforderung und unmittelbar vor der eigentlichen Übertragung auf das sie anfordernde Endgerät konvertiert, ohne dass dabei die zu konvertierenden Daten sowie die konvertierten Daten eines gesamten jeweils zur Wiedergabe angeforderten A/V-Inhalts in dem Konverter dauerhaft oder temporär gespeichert würden. Allenfalls ist ein Pufferspeicher vorgesehen, in welchem lediglich sehr kurze Sequenzen des jeweils angeforderten A/V-Inhalts temporär, das heißt sehr kurzzeitig gespeichert werden, um Probleme beim Datenfluss zu vermeiden, die aufgrund von Verzögerungen entstehen könnten, welche durch die für den Konvertierungsvorgang benötigte Bearbeitungszeit auftreten.

Sofern jedoch der Konverter Bestandteil der Endgeräteeinrichtung des Nutzers ist, kann die im Zusammenhang mit der Auslieferung der angeforderten TV-Inhalte erfolgende Konvertierung auch dadurch erfolgen, dass ein betreffender TV-Inhalt durch den Konverter der Endgeräteeinrichtung zunächst vollständig in das von dem anfordernden mobilen Endgerät benötigte Format konvertiert und unmittelbar anschließend daran an das mobile Endgerät ausgeliefert wird.

Zu einem die Aufgabe lösenden System gehören mindestens eine A/V-Inhalte durch Abspeicherung in digitalisierter Form aufzeichnende Aufzeichnungseinrichtung und mehrere mit der Aufzeichnungseinrichtung zumindest temporär über ein Netzwerk verbundene, zur Wiedergabe von A/V-Inhalten ausgebildete mobile Endgeräte (mobile Clients) unterschiedlicher technischer Spezifikation. Korrespondierend mit dem bereits beschriebenen Verfahren ist dabei die Aufzeichnungseinrichtung als Bestandteil einer lokal, bei einem die A/V-Inhalte zur Aufzeichnung auswählenden Nutzer angeordneten Endgeräteeinrichtung ausgebildet. Durch die letztgenannte Endgeräteeinrichtung werden mittels der Aufzeichnungseinrichtung aufgezeichneten A/V-Inhalte für eine Wiedergabe mittels der mit der Aufzeichnungseinrichtung über das Netzwerk verbindbaren mobilen Endgeräten bereitgestellt.

Darüber hinaus umfasst das System mindestens einen Konverter, welcher demnach ebenfalls Bestandteil des genannten Netzwerks ist. Der betreffende Konverter ist dazu ausgebildet, A/V-Inhalte vor der Übertragung an ein sie zur Wiedergabe anforderndes mobiles Endgerät in ein von diesem mobilen Endgerät verarbeitbares Datenformat zu konvertieren. Der Konverter umfasst zumindest einen Encoder, welcher die aufgezeichneten A/V-Inhalte in dem jeweiligen Datenformat codiert, welches ihre Wiedergabe durch ein einen jeweiligen Videoinhalt anforderndes mobiles Endgerät ermöglicht. Darüber hinaus kann Bestandteil des Konverters ein Decoder sein, mittels welchem die von der Aufzeichnungseinrichtung in deren primärem Aufzeichnungsformat aufgezeichneten A/V-Inhalte gegebenenfalls zunächst in ein für Videodateien generisches Datenformat überführt, welches der Encoder in diesem Falle dann wiederum in das von dem jeweiligen mobilen Endgerät beziehungsweise mobilen Client benötigte Datenformat, respektive in das Zielformat, wandelt.

Im Hinblick darauf, dass die vorgeschlagene Lösung insbesondere der Bereitstellung von TV-Inhalten für eine zeitversetzte Wiedergabe mittels mobiler Endgeräte dient, gehört gemäß einer vorteilhaften Ausbildung des Systems zu diesem ferner mindestens eine TV-Programmquelle. Hierbei handelt es sich selbstverständlich um eine TV-Programmquelle, deren von ihr ausgestrahlte TV-Inhalte mittels der Aufzeichnungseinrichtung speicherbar sind, wobei die TV-Inhalte, respektive A/V-Inhalte, vorzugsweise in dem nativen von der TV-Programmquelle ausgestrahlten Datenformat durch die Aufzeichnungseinrichtung gespeichert werden.

Der zu dem System gehörende Konverter ist gemäß einer ersten grundsätzlichen Ausbildungsform des erfindungsgemäßen Systems als ein Bestandteil derjenigen bei einem Nutzer lokal angeordneten Endgeräteeinrichtung ausgebildet, zu welcher auch die Aufzeichnungseinrichtung gehört. Dabei ist die Steuer- und Verarbeitungseinheit, durch welche das Zielformat der durch den Konverter vorzunehmenden Konvertierung beispielsweise anhand des zur Anforderung eines aufgezeichneten Inhalts verwendeten Protokolls oder anhand von dem anfordernden mobilen Endgerät/Client dazu übermittelter Informationen bestimmt wird, ebenfalls Bestandteil der lokal bei einem die A/V-Inhalte beziehungsweise die TV-Inhalte zur Aufzeichnung auswählenden Nutzer angeordneten Endgeräteeinrichtung.

Entsprechend einer anderen grundsätzlichen Ausbildungsform der Erfindung ist der zum System gehörende Konverter Bestandteil von elektronischen Einrichtungen eines Dienstleistungsanbieters, welche über das Netzwerk mit der Aufzeichnungseinrichtung und mit den zum Netzwerk gehörenden mobilen Endgeräten (mobilen Clients) verbunden sind. In diesem Falle erfolgt die Konvertierung der von der Aufzeichnungseinrichtung gespeicherten und durch ein mobiles Endgerät zur Wiedergabe angeforderten A/V-Inhalte, wie bereits zum Verfahren angesprochen, durch einen Dienstleistungsanbieter beziehungsweise durch elektronische Einrichtungen eines entsprechenden Dienstleistungsanbieters, zu denen bei dieser Ausbildungsform auch die schon mehrfach angesprochene Steuer- und Verarbeitungseinheit zur Ermittlung des Zielformats gehört.

Anhand von Zeichnungen sollen nachfolgend Ausführungsbeispiele für die Erfindung gegeben werden. Die Zeichnungen zeigen im Einzelnen:
- Fig. 1:: eine erste mögliche Ausbildungsform des erfindungsgemäßen Systems,
- Fig. 2:: eine alternative Ausbildungsform des Systems,
- Fig. 3:: die Ausbildungsform nach der Fig. 2 in einer anderen Betriebssituation.

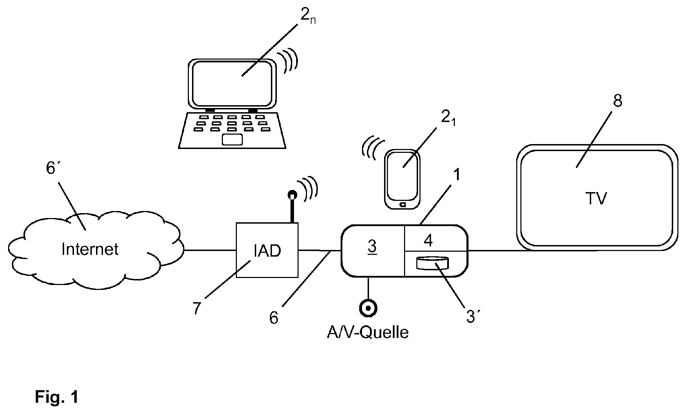

Die Fig. 1 zeigt eine erste mögliche Ausbildungsform des erfindungsgemäßen Systems in einer schematischen Darstellung. Zu dem System gehören hierbei die Aufzeichnungseinrichtung 3, 3', welche als Bestandteil einer lokal bei einem Nutzer angeordneten Endgeräteeinrichtung 1 ausgebildet ist, und mehrere mobile Endgeräte 2₁, 2ₙ, das heißt mobile Clients, für welche mittels der Aufzeichnungseinrichtung 3, 3' aufgezeichnete A/V-Inhalte durch die Endgeräteeinrichtung 1 über ein Netzwerk 6, 6' zur Wiedergabe bereitgestellt werden, über welches die mobilen Endgeräte 2₁, 2ₙ zumindest temporär, nämlich zumindest während der Anforderung und Übertragung eines Audio- und/oder Videoinhalts zur Wiedergabe, verbunden sind. Das in den Patentansprüchen beziehungsweise zuvor genannte Netzwerk 6, 6' umfasst zumindest ein lokales Netz 6 (LAN), welches - wie gemäß aller an dieser Stelle erläuterten Ausführungsbeispiele - vorzugsweise an ein Weitverkehrsnetz 6', nämlich insbesondere an das Internet, angebunden ist. Letzteres, nämlich die Anbindung an ein Weitverkehrsnetz 6' ist aber nicht zwingend und zum Beispiel dann nicht erforderlich, wenn der Konverter 4, wie in dem Beispiel gemäß der Fig. 1, in dem lokalen Netz 6, nämlich als Bestandteil der Endgeräteeinrichtung 1 ausgebildet ist und eine Nutzung der A/V-Inhalte nur über das lokale Netzwerk 6, insbesondere innerhalb der Reichweite über WLAN (Wireless LAN) in dieses lokale Netzwerk 6 eingebundener mobiler Endgeräte 2₁, 2ₙ (mobiler Clients) erfolgt oder zugelassen sein soll. Vorliegend ist aber, wie gesagt, auch bei dem in der Fig. 1 gezeigten Beispiel mit einem als Bestandteil der Endgeräteeinrichtung 1 ausgebildeten Konverter 4, das lokale Netz 6 (LAN) an das Internet und damit an ein Weitverkehrsnetz 6'angebunden.

Demnach gehören gemäß diesem sowie auch gemäß den nachfolgend erläuterten Ausführungsbeispielen sowohl das lokale Netz 6 als auch das Internet 6'zu dem bereits mehrfach angesprochenen Netzwerk 6, 6'. Die Verbindung eines oder mehrerer mobiler Endgeräte 2₁, 2ₙ (Clients) mit der Endgeräteeinrichtung 1 zum Zwecke der Anforderung und der Auslieferung eines A/V-Inhalts für die Wiedergabe kann dabei unmittelbar über das lokale Netz 6 (zum Beispiel über Funk unter Nutzung eines zum lokalen beziehungsweise privaten Netz 6 des Inhabers der Endgeräteeinrichtung 1 gehörenden WLAN) oder über das Internet (Weitverkehrsnetz 6') und schließlich das mit diesem gekoppelte lokale Netz 6 erfolgen. Im letztgenannten Fall des Zugriffs über das Internet 6'erfolgt dieser über einen durch einen Dienstleistungsanbieter betriebenen Server im Internet 6', welcher als Proxy-Server fungiert. Um vorzugsweise ständig einen Zugriff auch über das Internet 6'zu ermöglichen hält die lokal bei einem Nutzer der erfindungsgemäßen Lösung angeordnete Endgeräteeinrichtung 1 eine dauerhafte digitale Verbindung zu dem vorgenannten Proxy-Server.

Die mobilen Endgeräte 2₁, 2ₙ beziehungsweise Clients und die Endgeräteeinrichtung 1 verfügen über einen gemeinsam bekannten marktüblichen Authentifizierungsmechanismus, wie die Authentifizierung mittels Username und Password oder über eine Hardwareidentifikation mittels der MAC-Adresse oder der Seriennummer des jeweiligen mobilen Endgeräts 2₁, 2ₙ oder über einen vergleichbaren Authentifizierungsmechanismus. Die Authentifizierungsmerkmale sind entweder in der Endgeräteeinrichtung 1 oder/und auf dem schon erwähnten Server des Dienstleistungsanbieters gespeichert, in jedem Fall aber dem jeweiligen mobilen Endgerät 2₁, 2ₙ und der Endgeräteeinrichtung 1 zugänglich, wobei auf weitere Einzelheiten dazu im Rahmen der Darstellung der Erfindung nicht eingegangen werden soll, da diese selbst nicht Gegenstand der Erfindung sind.

Darüber hinaus verfügen die mobilen Endgeräte 2₁, 2ₙ (Clients) und die Endgeräteeinrichtung 1 über ein gemeinsam bekanntes Verfahren für den Auf- und Abbau einer Verbindung zur Verwaltung, zum Auffinden und zum Abruf der Aufnahmen (wie zum Beispiel DLNA, Samba oder Webdav) sowie zur lokalen Nutzung, das heißt zur Nutzung durch Anforderung eines A/V-Inhalts unmittelbar über das lokale Netz 6, oder zur Nutzung über das Internet 6', wobei auf dieses Verfahren hier ebenfalls nicht näher eingegangen werden soll. Durch die Endgeräteeinrichtung 1 beziehungsweise deren Aufzeichnungseirichtung 3, 3' wird vorzugsweise ein Katalog oder Index zu den mittels der Aufzeichnungseinrichtung 3, 3' aufgezeichneten und für die mobilen Endgeräte 2₁, 2ₙ durch die Endgeräteeinrichtung 1 bereitgestellten A/V-Inhalten gehalten.

Gemäß einer praxisgerechten Umsetzung der Erfindung versucht ein mobiles Endgerät 2₁, 2ₙ, mittels welchem der Nutzer einen A/V-Inhalt zum Zweck der Wiedergabe bei der Endgeräteeinrichtung 1 anfordert, für die Anforderung des A/V-Inhalts zunächst eine Verbindung unmittelbar über das lokale Netz 6 zu der Endgeräteeinrichtung 1 aufzubauen. Erst wenn dies nicht möglich ist, baut das mobile Endgerät 2₁, 2ₙ, das heißt der mobile Client, über das Weitverkehrsnetz 6'eine Verbindung zu dem Server (Proxy-Server) des Dienstleistungsanbieters und über diesen zu der Endgeräteeinrichtung 1 auf, wobei der Server die Verbindung zu der Endgeräteeinrichtung 1, deren Bestandteil die Aufzeichnungseinrichtung 3, 3' ist, vermittelt.

Gemäß den gezeigten Beispielen wird das lokale Netz durch einen so genannten IAD-Router 7 (IAD = Integrated Access Devise) bereitgestellt, welcher außerdem als Gateway zum Internet, das heißt zu dem Weitverkehrsnetz 6' fungiert. Bei den mobilen Endgeräten 2₁, 2ₙ beziehungsweise mobilen Clients handelt es sich beispielsweise um ein Smartphone 2₁ und ein Notebook 2ₙ (sowie um gegebenenfalls weitere mobile Endgeräte, wie Tablet-PCs und dergleichen), welche demgemäß zumindest mit einem Display zur Wiedergabe von A/V-Inhalten ausgestattet und darüber hinaus netzwerkfähig sind. Insoweit kann auch ein tragbarer Fernseher Bestandteil des Systems sein, sofern dieser netzwerkfähig ist. Die vorgenannten mobilen Endgeräte können über den IAD-Router 7 drahtgebunden aber auch drahtlos (temporär) mit dem Netzwerk 6, 6' verbunden sein.

Die lokal bei einem Nutzer angeordnete Endgeräteeinrichtung 1 ist in dem in der Fig. 1 dargestellten Ausführungsbeispiel in Form einer Set-Top-Box ausgebildet. Diese Set-Top-Box umfasst neben der aus Hard- und Softwarekomponenten bestehenden Aufzeichnungseinrichtung 3, 3' einen Konverter 4 und ein zum Heimbereich des Nutzers gehörendes Wiedergabegerät in Form eines TV-Gerätes 8. Bei den vorgenannten Hard- und Softwarekomponenten der Aufzeichnungseinrichtung 3, 3' handelt es sich insbesondere um eine Steuer- und Verarbeitungseinheit 3 mit einer von dieser verarbeiteten Firmware und/oder mit Programmanwendungen und um einen Speicher 3', beispielsweise in Form einer Festplatte. In dem Beispiel gemäß der Fig. 1 ist der Konverter 4 als Bestandteil der lokalen Endgeräteeinrichtung 1, also der Set-Top-Box, ausgebildet.

Die Endgeräteeinrichtung 1 (Set-Top-Box) verfügt über mindestens einen, in der Zeichnung mit A/V-Quelle bezeichneten Eingang, über welchen der Aufzeichnungseinrichtung 3, 3' A/V-Inhalte unterschiedlicher Quellen zur Aufzeichnung zugeführt werden können. Hierbei handelt es sich um Quellen wie A/V-Inhalte über ein IP-Netz, insbesondere das Internet 6'verbreitende Sender (zum Beispiel IP-TV), A/V-Inhalte über Satellit verbreitende Sender, A/V-Inhalte über das Kabelnetz verbreitende Sender, terrestrisch (digital) abstrahlende Sender (DVB-T = Digital Video Broadcasting - Terrestrial beziehungsweise "Digitales terrestrisches Fernsehen" oder DAB = Digital Audio Broadcasting beziehungsweise "Digitalradio") oder aber gegebenenfalls auch um andere Geräte des Inhabers der Endgeräteeinrichtung 1 für die Wiedergabe von mittels der Aufzeichnungseinrichtung aufzuzeichnender A/V-Inhalte (zum Beispiel CD- oder Blu-ray Disc-Player). Der vorgenannte mindestens eine Eingang für A/V-Quellen ist dabei in der Abbildung lediglich symbolisch als ein Anschluss dargestellt, wobei es sich dabei tatsächlich um einen physischen Anschluss beziehungsweise Anschluss zur galvanischen Kopplung der Endgeräteeinrichtung 1 mit einer A/V-Quelle aber ebenso auch um eine Funkempfangseinheit mit einer Antenne handeln kann.

Im Falle eines Abrufs von durch die Aufzeichnungseinrichtung 3, 3' in ihrem primären Aufzeichnungsformat abgespeicherten A/V-Inhalten mittels eines der gezeigten mobilen Endgeräte 2₁, 2ₙ werden die angeforderten A/V-Inhalte durch den zu der Endgeräteeinrichtung 1 gehörenden Konverter 4 in das von dem anfordernden mobilen Endgerät 2₁, 2ₙ verarbeitbare Datenformat konvertiert und über das Netzwerk 6, 6' an das betreffende mobile Endgerät 2₁, 2ₙ übertragen. Die Konvertierung des Datenformats und die Übertragung der konvertierten A/V-Inhalte können dabei einen zusammenhängenden Vorgang darstellen, bei dessen Ablauf die angeforderten A/V-Inhalte gewissermaßen on "the fly", nämlich unmittelbar vor ihrer Übertragung an das sie anfordernde mobile Endgerät 2₁, 2ₙ, konvertiert werden.

Denkbar ist es aber auch, dass die durch die Aufzeichnungseinrichtung 3, 3' in ihrem primären Aufzeichnungsformat gespeicherten A/V-Inhalte beispielsweise im Standby-Betrieb der Endgeräteeinrichtung 1, nämlich dann, wenn auch augenblicklich keine A/V-Inhalte durch die Aufzeichnungseinrichtung 3, 3' aufgezeichnet werden, mittels des Konverters 4 in mehrere durch die Endgeräteeinrichtung 1 unterstützte Datenformate konvertiert und in einem (vorzugsweise als Teil der genannten Festplatte ausgebildeten) Speicher 3'der Endgeräteeinrichtung 1 abgelegt werden. Im Falle einer Anforderung der betreffenden A/V-Inhalte durch ein mobiles Endgerät 2₁, 2ₙ liegen die A/V-Inhalte dann bereits in dem durch das anfordernde Endgerät 2₁, 2ₙ benötigten Datenformat vor.

Sofern die Konvertierung der A/V-Inhalte in das Datenformat des sie anfordernden mobilen Endgeräts 2₁, 2ₙ im Zusammenhang mit der Auslieferung an das betreffende mobile Endgerät 2₁, 2ₙ (also beispielsweise on "the fly") erfolgt, wird das Datenformat, in welches die A/V-Inhalte zu konvertieren sind, durch die gezeigte Steuer- und Verarbeitungseinheit 3 der Endgeräteeinrichtung 1 (Set-Top-Box) oder eine nichtgezeigte Steuer- und Verarbeitungseinheit des Konverters 4 beispielsweise anhand von Informationen zum Gerätetyp des die Inhalte anfordernden Endgeräts 2₁, 2ₙ ermittelt, welche durch das betreffende mobile Endgerät 2₁, 2ₙ im Zuge der Anforderung der A/V-Inhalte an die Endgeräteeinrichtung 1 übertragen werden.

Wie bereits ausgeführt, ist bei der Ausbildungsform gemäß der Fig. 1 der Konverter 4 lokal als Teil der Endgeräteeinrichtung 1 ausgebildet. Die Auslieferung angeforderter und mittels dieses Konverters 4 konvertierter A/V-Inhalte erfolgt aber dennoch vorzugsweise über einen von einem Dienstleistungsanbieter im Internet 6' betriebenen (hier nicht dargestellten) Proxy-Server. Unabhängig davon ist auch der Zugriff auf die Endgeräteeinrichtung 1 zum Zweck der Anforderung von A/V-Inhalten sowohl unmittelbar über das lokale Netz 6 als auch über einen Proxy-Server im Internet 6'und durch dessen Vermittlung schließlich über das lokale Netz 6 möglich.

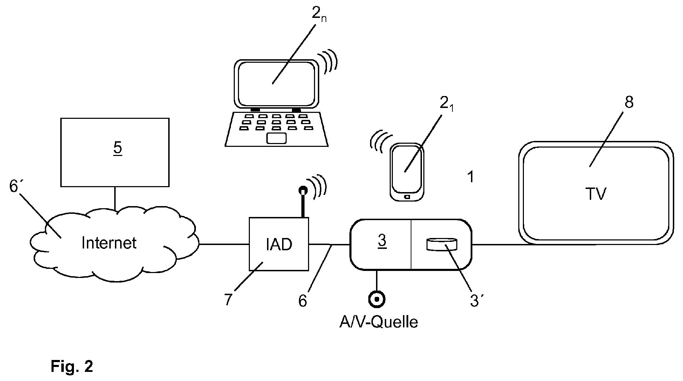

Eine andere mögliche Ausbildungsform des vorgestellten Systems ist in der Fig. 2 ebenfalls in einer schematischen Darstellung wiedergegeben. Bei dem gezeigten Beispiel handelt es sich um eine Ausbildungsform, bei welcher der Konverter 5 auf einem Server eines einen entsprechenden Dienst über das Internet 6' anbietenden Dienstleistungsanbieters realisiert ist. Vorzugsweise (aber nicht zwingend) handelt es sich hierbei um denselben Dienstleistungsanbieter der auch den bereits erwähnten Proxy-Server betreibt, über welchen mobilen Endgeräten 2₁, 2ₙ unter Einbeziehung des Internets 6'der Zugriff auf die Endgeräteeinrichtung 1 zur Anforderung von aufgezeichneten A/V-Inhalten ermöglicht wird.

Die mobilen Endgeräte 2₁, 2ₙ werden auch bei dieser Ausbildungsform zur Anforderung sowie zur Übertragung von A/V-Inhalten, wie bevorzugt, drahtlos mit dem Netzwerk 6, 6' verbunden. Vorzugsweise ist es dabei erforderlich, dass sich die mobilen Endgeräte 2₁, 2ₙ zur Anforderungen von der Aufzeichnungseinrichtung 3, 3' gespeicherter A/V-Inhalte gegenüber der Endgeräteeinrichtung 1 hinsichtlich ihrer Berechtigung authentifizieren. Die Endgeräteeinrichtung 1 mit der im Wesentlichen aus einer Steuer- und Verarbeitungseinheit 3 mit einer Firmware und/oder Programmanwendungen und aus einem Speicher 3' (zum Beispiels Festplatte) bestehenden Aufzeichnungseinrichtung 3, 3' ist vergleichbar mit der in der Fig. 1 gezeigten, verfügt aber anders als diese selbst nicht über einen Konverter. Auch hier verfügt die Endgeräteeinrichtung 1 selbstverständlich über mindestens einen, wiederum durch einen Anschluss symbolisierten Eingang für unterschiedliche A/V-Quellen. In der Fig. 2 ist eine Betriebssituation gezeigt, in welcher von der Aufzeichnungseinrichtung 3, 3' der Endgeräteeinrichtung 1 zuvor aufgezeichnete A/V-Inhalte mittels mobiler Endgeräte 2₁, 2ₙ des Inhabers der Endgeräteeinrichtung 1 oder von anderen durch diesen Inhaber dazu berechtigten Personen unmittelbar über das lokale Netz 6 (LAN) angefordert werden. Die Auslieferung der angeforderten A/V-Inhalte erfolgt nach ihrer Konvertierung durch den Konverter 5 wiederum über das Internet beziehungsweise Weitverkehrsnetz 6'. Dabei ist jedoch der Konverter 5 nicht lokal als Teil der technischen Ausstattung des Inhabers der Aufzeichnungseinrichtung 3, 3' sondern bei einem Dienstanbieter angeordnet, dessen Systeme, wie beispielsweise ein den Konverter 5 bereitstellender Server, über das Internet 6' ansprechbar sind.

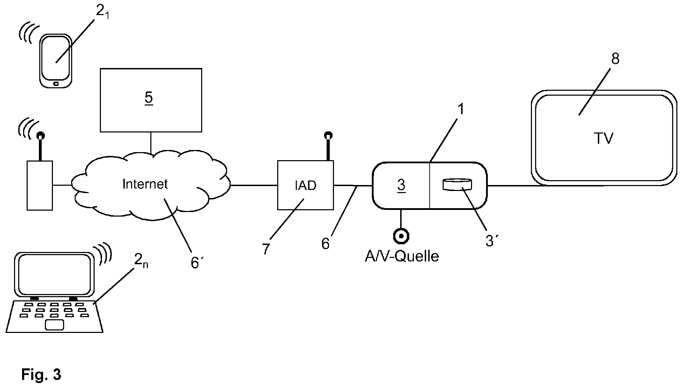

In der Fig. 3 ist nochmals die Ausbildungsform gemäß der Fig. 2 in einer anderen Betriebssituation dargestellt. Bei ansonsten gleichem Aufbau des Gesamtsystems werden hierbei A/V-Inhalte durch die mobilen Endgeräte 2₁, 2ₙ (Clients) unter Einbeziehung des Internets 6' über einen Proxy-Server eines Dienstleistungsanbieters, vorzugsweise einen Proxy-Server des auch den Konverter 5 betreibenden Dienstleistungsanbieters angefordert. Selbstverständlich sind auch Mischformen der in den Figuren 2 und 3 gezeigten Betriebssituationen möglich, bei denen zum Beispiel ein erstes mobiles Endgerät 2₁, welches einen A/V-Inhalt bei der Endgeräteeinrichtung 1 anfordert, mit dieser unmittelbar über das lokale Netz 6 als Teil des Netzwerks 6, 6' verbunden ist, wohingegen ein anderes, zweites mobiles Endgerät 2ₙ (gegebenenfalls gleichzeitig) zur Anforderung eines aufgezeichneten A/V-Inhalts über einen Proxy-Server im Internet 6'mit der Endgeräteeinrichtung 1 verbunden ist.

## Patentansprüche

1. Verfahren zur Bereitstellung von A/V-Inhalten, nämlich von Audio- und/oder Videoinhalten, für eine Wiedergabe mittels mobiler Endgeräte (2₁, 2ₙ) unterschiedlicher technischer Spezifikation, nach welchem von einem Nutzer ausgewählte A/V-Inhalte mittels einer dafür ausgebildeten Aufzeichnungseinrichtung (3, 3') in Form digitaler Daten gespeichert und solchermaßen aufgezeichnete A/V-Inhalte aufgrund einer Anforderung für eine Wiedergabe auf ein dazu verwendetes mobiles Endgerät (2₁, 2ₙ) übertragen werden, **dadurch gekennzeichnet, dass** die A/V-Inhalte in einem primären Aufzeichnungsformat der Aufzeichnungseinrichtung (3, 3') gespeichert werden, die als Bestandteil einer lokal, bei einem die A/V-Inhalte zur Aufzeichnung auswählenden Nutzer angeordneten Endgeräteeinrichtung (1) ausgebildet ist, durch welche die aufgezeichneten A/V-Inhalte über ein Netzwerk (6, 6') für eine Wiedergabe mittels der mobilen Endgeräte (2₁, 2ₙ) bereitgestellt werden und dass ein A/V-Inhalt vor seiner Übertragung an ein diesen A/V-Inhalt über das Netzwerk (6, 6') anforderndes mobiles Endgerät (2₁, 2ₙ) in ein die Wiedergabe auf diesem Endgerät (2₁, 2ₙ) ermöglichendes Datenformat konvertiert wird.

2. Verfahren nach Anspruch 1, wobei es sich es sich bei den aufgezeichneten A/V-Inhalten zumindest teilweise um durch eine TV-Programmquelle ausgestrahlte TV-Inhalte handelt, welche durch die lokal angeordnete Endgeräteeinrichtung (1) für eine zeitversetzte Wiedergabe mittels mobiler Endgeräte (2₁, 2ₙ) aufgezeichnet und bereitgestellt werden.

3. Verfahren nach Anspruch 2, **dadurch gekennzeichnet, dass** das primäre Aufzeichnungsformat der als Bestandteil der lokal angeordneten Endgeräteeinrichtung (1) ausgebildeten Aufzeichnungseinrichtung (3, 3') dem nativen Datenformat des von der TV-Programmquelle ausgestrahlten und mittels der Endgeräteeinrichtung (1) empfangenen TV-Inhalts entspricht.

4. Verfahren nach Anspruch 1 oder 3, **dadurch gekennzeichnet, dass** die in dem primären Aufzeichnungsformat der Aufzeichnungseinrichtung (3, 3') gespeicherten Daten mit den A/V-Inhalten in Zeiträumen innerhalb welcher entsprechende Ressourcen der Endgeräteeinrichtung (1) nicht anderweitig gebunden sind, durch einen oder mehrere Konverter (4) der Endgeräteeinrichtung (1) selbsttätig in andere von der Endgeräteeinrichtung (1) unterstützte, durch mobile Endgeräte wiedergebbare Datenformate umgewandelt und in Speichermitteln der Endgeräteeinrichtung gespeichert werden.

5. Verfahren nach Anspruch 4, **dadurch gekennzeichnet, dass** die Umwandlung der gespeicherten A/V-Inhalte in die durch die mobilen Endgeräte (2₁, 2ₙ) wiedergebbaren Datenformate in Zeiträumen erfolgt, in denen die Endgeräteeinrichtung (1) in einem Standby-Betrieb ist und von ihr keine A/V-Inhalte aufgezeichnet werden.

6. Verfahren nach Anspruch 1 oder 3, **dadurch gekennzeichnet, dass** die von der Aufzeichnungseinrichtung (3, 3') in deren primären Datenformat gespeicherten A/V-Inhalte im Zusammenhang mit der Auslieferung an ein sie zur Wiedergabe von der Endgeräteeinrichtung (1) anforderndes mobiles Endgerät (2₁, 2ₙ) in ein die Wiedergabe auf diesem Endgerät (2₁, 2ₙ) ermöglichendes Datenformat konvertiert werden.

7. Verfahren nach Anspruch 6, **dadurch gekennzeichnet, dass** das die A/V-Inhalte zur Wiedergabe anfordernde mobile Endgerät (2₁, 2ₙ) zusammen mit der Anforderung der A/V-Inhalte Informationen dazu übermittelt, in welches Datenformat die A/V-Inhalte bei ihrer Auslieferung zu konvertieren sind.

8. Verfahren nach Anspruch 6, **dadurch gekennzeichnet, dass** mittels einer Steuer- und Verarbeitungseinheit das von dem die A/V-Inhalte anfordernden mobilen Endgerät (2₁, 2ₙ) zu deren Wiedergabe benötigte Datenformat bestimmt und ein entsprechender Konverter (4, 5) zur Konvertierung der angeforderten A/V-Inhalte in dieses Datenformat angesteuert wird.

9. Verfahren nach Anspruch 7 oder 8, **dadurch gekennzeichnet, dass** zur Wiedergabe angeforderte A/V-Inhalte mittels eines Konverters (4) der Endgeräteeinrichtung (1) in das von dem anfordernden mobilen Endgerät (2₁, 2ₙ) wiedergebbare Datenformat konvertiert und durch die Endgeräteeinrichtung (1) über das Netzwerk (6, 6') unmittelbar an dieses mobile Endgerät (2₁, 2ₙ) ausgeliefert werden.

10. Verfahren nach Anspruch 7 oder 8, **dadurch gekennzeichnet, dass** die Konvertierung des Datenformats von mittels eines mobilen Endgeräts (2₁, 2ₙ) zur Wiedergabe angeforderten A/V-Inhalten durch einen zu elektronischen Einrichtungen eines Dienstleistungsanbieters gehörenden und mit der Endgeräteeinrichtung (1) über ein Netzwerk (6, 6') verbundenen Konverter (5) erfolgt, wobei die betreffenden A/V-Inhalte bei ihrer Anforderung zur Wiedergabe durch die Endgeräteanordnung (1) als Datei in deren primären Aufzeichnungsformat an die elektronischen Einrichtungen des Dienstleistungsanbieters übermittelt und von diesen nach der Konvertierung des Datenformats an das sie anfordernde mobile Endgerät (2₁, 2ₙ) ausgeliefert werden.

11. Verfahren nach Anspruch 9 oder 10, **dadurch gekennzeichnet, dass** die aufgezeichneten A/V-Inhalte bei ihrer Anforderung zur Wiedergabe sequentiell in das von dem anfordernden mobilen Endgerät (2₁, 2ₙ) verarbeitbare Datenformat konvertiert und eine jeweils konvertierte Sequenz des angeforderten A/V-Inhalts an das anfordernde mobile Endgerät (2₁, 2ₙ) ausgeliefert wird, wobei die konvertierten Sequenzen ledig temporär in einem dafür vorgesehenen speziellen Pufferspeicher gespeichert werden.

12. Verfahren nach Anspruch 9, **dadurch gekennzeichnet, dass** die aufgezeichneten A/V-Inhalte bei ihrer Anforderung zur Wiedergabe zunächst vollständig in das durch das anfordernde mobile Endgerät (2₁, 2ₙ) verarbeitbare Datenformat konvertiert und in diesem Datenformat in einem Zwischenspeicher der Endgeräteanordnung (1) abgelegt werden, aus welchem sie nach dem Abschluss des Konvertierungsvorgangs an das die A/V-Inhalte anfordernde mobile Endgerät (2₁, 2ₙ) ausgeliefert werden.

13. System mit einer A/V-Inhalte durch Abspeicherung in digitalisierter Form aufzeichnenden Aufzeichnungseinrichtung (3, 3') und mit mehreren mit der Aufzeichnungseinrichtung über ein Netzwerk (6, 6') verbindbaren, zur Wiedergabe von A/V-Inhalten ausgebildeten mobilen Endgeräte (2₁, 2ₙ) unterschiedlicher technischer Spezifikation, **dadurch gekennzeichnet, dass** die Aufzeichnungseinrichtung (3, 3') als Bestandteil einer lokal, bei einem die A/V-Inhalte zur Aufzeichnung auswählenden Nutzer angeordneten Endgeräteeinrichtung (1) ausgebildet ist, durch welche mittels der Aufzeichnungseinrichtung (3, 3') aufgezeichnete A/V-Inhalte für eine Wiedergabe mittels der über das Netzwerk (6, 6') mit der Aufzeichnungseinrichtung (3, 3') verbindbaren mobilen Endgeräte (2₁, 2ₙ) bereitgestellt werden und dass Bestandteil des Systems ein Konverter (4, 5) ist, durch welchen A/V-Inhalte vor der Übertragung an ein sie zur Wiedergabe anforderndes mobiles Endgerät (2₁, 2ₙ) des Netzwerkes (6, 6') in ein die Wiedergabe auf diesem mobilen Endgerät (2₁, 2ₙ) ermöglichendes Datenformat konvertiert werden.

14. System nach Anspruch 13, **dadurch gekennzeichnet, dass** dieses weiterhin mindestens eine TV-Programmquelle umfasst, deren von ihr ausgestrahlte TV-Inhalte mittels der Aufzeichnungseinrichtung (3, 3') für eine zeitversetzte Wiedergabe durch die zu dem Netzwerk (6, 6') gehörenden mobilen Endgeräte (2₁, 2ₙ) speicherbar sind.

15. System nach Anspruch 13 oder 14, **dadurch gekennzeichnet, dass** der mindestens eine Konverter (4) Bestandteil der auch die Aufzeichnungseinrichtung (3, 3') umfassenden Endgeräteeinrichtung (1) ist.

16. System nach Anspruch 13 oder 14, **dadurch gekennzeichnet, dass** der mindestens eine Konverter (5) Bestandteil von elektronischen Einrichtungen eines Dienstleistungsanbieters ist, mit welchen die Aufzeichnungseinrichtung (3, 3') und die mobilen Endgeräte (2₁, 2ₙ) über das Netzwerk (6, 6') verbindbar sind.
